# EUROPÄISCHE PATENTSCHRIFT

(11) **EP 1 602 269 B1**
(45) Veröffentlichungstag und Bekanntmachung des Hinweises auf die Patenterteilung: **23.12.2009**
(21) Anmeldenummer: 05011769.6
(22) Anmeldetag: 01.06.2005
(51) Int. Cl.: A01F 15/07

(54) **Ballenpresse mit einem nachgeschalteten Ballenumwickler**
Baler with a downstream-arranged balewrapper
Presse à balles avec une enrubanneuse de balles montée en aval

(30) Priorität: 04.06.2004 DE 102004027307
(43) Veröffentlichungstag der Anmeldung: 07.12.2005
(73) Patentinhaber: Welger Maschinenfabrik GmbH, D-38304 Wolfenbüttel (DE)
(72) Erfinder: Platon, Günter, 38321 Denkte (DE)

(56) Entgegenhaltungen:
- EP-A- 1 077 024
- WO-A-00/16607
- DE-A1- 10 114 577
- US-A- 5 996 307

## Beschreibung

Die Erfindung betrifft eine Ballenpresse mit einem nachgeschalteten Ballenumwickler nach dem Oberbegriff des Patentanspruches 1.

Die Umhüllung von Rundballen mit einer Netzmaterialbahn gewinnt wegen der Zeitersparnis und anderer Vorteile zunehmend an Bedeutung. Die Materialbahnrollenentwicklung zielt auf größere Lauflängen, d.h. 3000 m und größere Breiten, z.B. 140 cm hin, um eine bessere Umhüllung der Rundballenstirnseitenkanten zu erreichen. Dadurch steigt das Rollengewicht auf 50 bis 60 kg an, wodurch die manuelle Handhabung sehr erschwert und teilweise gefährlich ist, da die Materialbahnrollen erst in relativ hoher Position in die Vorratsstation gelegt werden.

Die DE 197 11 164 A1 offenbart eine Rundballenpresse mit einer Ladeeinrichtung, die von einer verriegelbaren Ruheposition, in der sich diese parallel zu und unter einer Pressenverkleidung befindet, etwa 90° in eine Übergabeposition schwenkbar ist. Nachteilig hierbei ist, daß die schwere Rolle in relativ großer Höhe seitlich von der Ladeeinrichtung in die Abrollstation eingeschoben muß. Darüber hinaus erfordert dieser Wechselvorgang relativ viele Arbeitsgänge und viel Zeit. Die Schutzverkleidung ist zu öffnen, die leere Materialbahnrolle zu entnehmen und die Bremseinrichtung für die Materialbahnrolle zurückzuschwenken, die Ladeeinrichtung ist zu verschwenken, anzuheben und erst dann kann die volle Materialbahnrolle von Hand eingeschoben werden. Vor der Inbetriebnahme müssen erst die vorgenannten Arbeitsvorgänge in umgekehrter Reihenfolge durchgeführt werden.

Zwei übereinander an dem Hintergehäuse einer Rundballenpresse angeordnete Materialbahnrollenstationen sind in der EP 0935 915 B1 offenbart. Hierbei ist eine passive Vorratsrolle oberhalb der aktiven Materialbahnrolle angeordnet. Nach Aufbrauch der aktiven Materialbahnrolle soll die Vorratsrolle - zunächst einseitig - nach unten in die Abrollstation abgesenkt werden. Hierzu sind aufwendige Stützmechanismen notwendig. Nachteilig ist vor allem auch hier, dass die Vorratsrolle zunächst in eine hochgelegene Position gebracht werden muss, wodurch diese Einrichtung für eine Anbringung am Vordergehäuse ungeeignet ist. Außerdem verkantet die Vorratsrolle beim einseitigen Absenken und zahlreiche Arbeitsschritte machen die Überführung der Vorratsrolle aus der Vorratsstaion in die Abrollstation zeitaufwendig.

In der DE 100 04 563 A1 und der DE 100 04 564 A1 sind Rundballenpressen mit verbesserten Lade-/Transporteinrichtungen dargestellt und beschrieben, mit denen eine Materialbahnrolle kraftbeaufschlagt in die Vorratsstation bringbar ist, jedoch besteht weiterhin der Nachteil, daß die schwere Materialbahnrolle manuell aus der Vorratsstation in die Abrollstation zu überführen ist.

Bei einer weiteren bekannten Rundballenpresse (EP 109 93 66 A1) sind zwei Netzmaterialbahnrollen in einem Aufnahmebehälter übereinander angeordnet. Die obere Materialbahnrolle ist auf einem muldenförmigen, fest im Aufnahmebehälter angeordneten Boden angeordnet, während die untere Materialbahnrolle in der Abrollstation auf einer der beiden Einzugswalzen einer Netzumhülleinrichtung aufliegt. Bei leerer unterer Materialbahnrolle muß erst der Aufnahmebehälter nach oben um eine horizontale Achse geklappt werden, dann die obere Materialbahnrolle von Hand entnommen und auf einen in eine etwa horizontale Lage ausgeschwenkten Ladebügel gelegt werden. Nach Entnahme der leeren Materialbahnrolle wird die volle Materialbahnrolle durch Hochschwenken des Ladebügels in die Abrollstation gebracht.

Eine ähnliche Einrichtung ist der EP 108 06 28 A1 entnehmbar. Hier sind zwei Materialbahnrollen auf Tragachsen übereinander in einem um eine vertikale Achse schwenkbaren Aufnahmebehälter angeordnet. Die Beschickung der unten gelegenen Abrollstation erfolgt durch Entnahme der oberen Materialbahnrolle aus Langlochführungen im Aufnahmebehälter und Einführung in die tiefergelegenen Langlochführungen der Abrollstation. Nachteilig auch hier der manuelle Kraftaufwand.

Schließlich ist in der DE 92 11 541.1 U1 eine Rundballenpresse mit zwei übereinander angeordneten Materialbahnrollen dargestellt und beschrieben. Die obere ist achslos in einem Rohr untergebracht, die untere auf einer durchgehenden Drehachse gelagert. Zum Wechsel der unteren (leeren) Materialbahnrolle gegen die obere volle Materialbahnrolle ist zunächst die untere nach Entriegelung zu entnehmen, die obere herauszuziehen und auf die Drehhalterung zu schieben, die anschließend zu verriegeln ist.

Außer dem manuellen und zeitlichen Aufwand dieser bekannten Einrichtungen haftet allen bekannten Einrichtungen der große Nachteil an, daß diese keine Fernbetätigung vom Schlepper aus ermöglichen.

Der WO 00/16607 ist ein Ballenwickelgerät zum Umwickeln von Rundballen mit Folie entnehmbar. Hierbei wird eine Folienrolle zwischen zwei Dornen gehalten, die Bestandteil einer ortsfest am Gestell angeordneten Folienrollenhalterung sind. Der untere Dorn ist ortsfest aber drehbar angeordnet, während der obere Dorn in vertikaler Richtung gegen die Kraft einer Feder verschiebbar ist zwischen einer verriegelbaren oberen Position und einer durch Anschlag begrenzten unteren Position. Zum Einlegen einer Folienrolle wird der obere Dorn zunächst in seiner oberen Position verriegelt, dann die Folienrolle fluchtend zu den Dornachsen eingesetzt und schließlich ein Seilzug betätigt, wodurch der obere Dorn entriegelt wird, der dann in die Papphülse eingreift, welche form- und kraftschlüssig zwischen den Dornen gehalten wird. Offenbart ist darüber hinaus eine Folienrollenhalterung für mehrere Vorratsrollen, die von unteren Dornen getragen werden, die auf einer Drehscheibe angeordnet sind. Nach Aufbrauch einer Rolle wird die nächste Rolle nach dem vorbeschriebenen Verfahren von Hand unter den verschiebbaren oberen Dorn gedreht und nach Betätigung des Seilzuges zwischen den Dornen gehalten. Diese Hilfseinrichtung erleichtert das Einlegen der Rolle durch eine Person, hat aber neben den manuellen Arbeitsschritten den grundsätzlichen Nachteil, dass sie für sogenannte Dreharmgeräte, wie diese beispielsweise in der EP 0234 763 A1 beschrieben sind, grundsätzlich nicht geeignet sind. Hierbei trägt der Dreharm an seinem äußeren Ende eine Folienrolle. Die Anordnung mehrerer, statt einer Folienrolle an einem Armende würde zu hohen Massenbeschleunigungen und großen Bauteilbeanspruchungen führen, so dass in der Abrollstation nur eine Folienrolle anzuordnen ist und weitere gegebenenfalls in einer separaten Vorratsstation zur Verfügung stehen müssten.

Aus der DE 37 26 139 A1 ist eine stationäre Maschine zum automatischen Auswechseln von Folien-Vorratsrollen bekannt und aus der DE 195 06 032 A1 ein automatischer Folienwechsel ohne Unterbrechung der laufenden Produktion. Diese Einrichtungen erfordern einen sehr hohen konstruktiven und fertigungstechnischen Aufwand und sind für den Rollenaustausch an Umhüllvorrichtungen für Erntegutballen zu teuer und zu störungsanfällig im rauhen Feldbetrieb.

Der Erfindung liegt die Aufgabe zugrunde, die Stillstandszeiten der Kombination aus Ballenpresse und Ballenumwickler zu verringern und die operative Reichweite zu erhöhen gegenüber herkömmlichen Vorrichtungen zum Umhüllen von Erntegutballen. Darüber hinaus soll die Vorrichtung einfach und kostengünstig in der Herstellung sein.

Diese Aufgabe wird erfindungsgemäß durch die Merkmale im Kennzeichnungsteil des Patentanspruches 1 gelöst. Vorteilhafte Weiterbildungen ergeben sich aus den Ansprüchen 2 bis 10.

Bei dieser Kombination kommen die Vorteile der erfindungsgemäßen Vorrichtung zum Rollenaustausch besonders zum Tragen, da die herkömmlichen Folienrollenwechsel häufiger anfallen als die Netzrollenwechsel in der Rundballenpresse, weil die Kombination während des Umwickelvorganges des Ballens gleichzeitig einen neuen Ballen wickelt. Die bisher üblichen Montage- und Demontageschritte entfallen. Für den Wechselvorgang ist kein Kraftaufwand durch den Bediener erforderlich und das Unfallrisiko für den Bediener ist beseitigt.

Zur weiteren Erläuterung der Erfindung wird auf die Zeichnungen und auf die nachfolgende Beschreibung verwiesen. In den Zeichnungen zeigen:
- Fig. 1: eine schematische Seitenansicht einer Rundballenpresse mit einer Schnellwechseleinrichtung in in Volllinie gezeichneter Position in der Abrollstation und in in Strichlinie dargestellter Position in der Vorratsstation,
- Fig.2: eine Draufsicht auf die Schnellwechseleinrichtung in Fig. 1 in Blickrichtung des Pfeiles A,
- Fig. 3: in schematischer Darstellung eine zweite Ausführungsform einer Schnellwechseleinrichtung und
- Fig. 4 bis 9: jeweils ein anderes Ausführungsbeispiel.
- Fig. 10: eine schematische Seitenansicht eines Teils einer Rundballenpresse mit angebautem Ballenumwickler und einer erfindungsgemäßen Schnellwechseleinrichtung für den Ballenumwickler, wobei nur Figur 10 eine erfindungsgemäße Ballonpresse wiedergibt.

Die Rundballenpresse hat ein allgemein mit 1 beziffertes Fahrgestell mit Rädern 2, welches über eine Zugdeichsel 3 an einen nicht dargestellten Schlepper anzuhängen ist. Den Rädern 2 ist in durch Pfeil 4 gekennzeichnete Arbeitsrichtung der Rundballenpresse eine mit 5 bezifferte Aufnahmevorrichtung (Pickup) üblicher Bauart vorgeordnet. Auf dem Fahrgestell 1 ist ein allgemein mit 6 beziffertes Pressengehäuse angeordnet, bestehend aus einem gestellfesten Vordergehäuse 7 mit vorderen Seitenwänden 8, 9 und einem gelenkig mit dem Vordergehäuse 7 verbundenen Hintergehäuse 10, welches nach Formung eines Ballens um eine obere Schwenkachse 11 zum Ballenausstoß aufklappbar ist.

Zwischen sich gegenüberliegenden, einander entsprechenden Seitenwänden 8, 9 erstrecken sich Preßelemente in Form von Presswalzen 12, die umfangsseitig einen Preßraum 13 begrenzen. Es können aber auch Riemen, Stabförderketten oder Kombinationen davon sein. Desgleichen kann der Preßraum 13 einer Bauart mit konstantem oder variablem Preßraumdurchmesser sein. Der Antrieb der Preßelemente erfolgt durch eine nicht dargestellte, mit einem Hauptgetriebe gekoppelte Gelenkwelle vom Schlepper aus.

Oberhalb der Preßwalzen ist eine Umhüllvorrichtung 14 vorgesehen, mittels welcher eine Materialbahn 15, wie beispielsweise Netz oder Folie durch einen Spalt 16 zwischen zwei Preßwalzen 12 dem Preßraum 13 zuführbar ist, um einen fertig gepreßten Ballen formfixierend zu umhüllen. Die Materialbahn 15 wird in einer Abrollstation 17 von einer Materialbahnrolle 18 abgezogen. Bekannte Abrollstationen weisen entweder achslos in einem Aufnahmebehälter oder um eine horizontale, parallel zur Mittelachse des Preßraumes 13 angeordnete Drehachse 20 drehbar gelagerte Materialbahnrollen 18 auf. Die Umhüllvorrichtung 14 weist darüber hinaus eine an sich bekannte Materialbahnrollenbremse, eine Abzugseinrichtung 22 und eine Trenneinrichtung 23 für die Materialbahn 15 auf.

Neu ist eine Schnellwechseleinrichtung 24, mittels welcher eine zweite Materialbahnrolle 25 aus einer Vorratsstation 26 in die Abrollstation 17 bringbar ist, wenn die erste Materialbahnrolle 18 beispielsweise leer ist oder wenn eine Materialbahnrolle mit anderem Umhüllmaterial, z.B. Folie statt Netz verwendet werden soll.

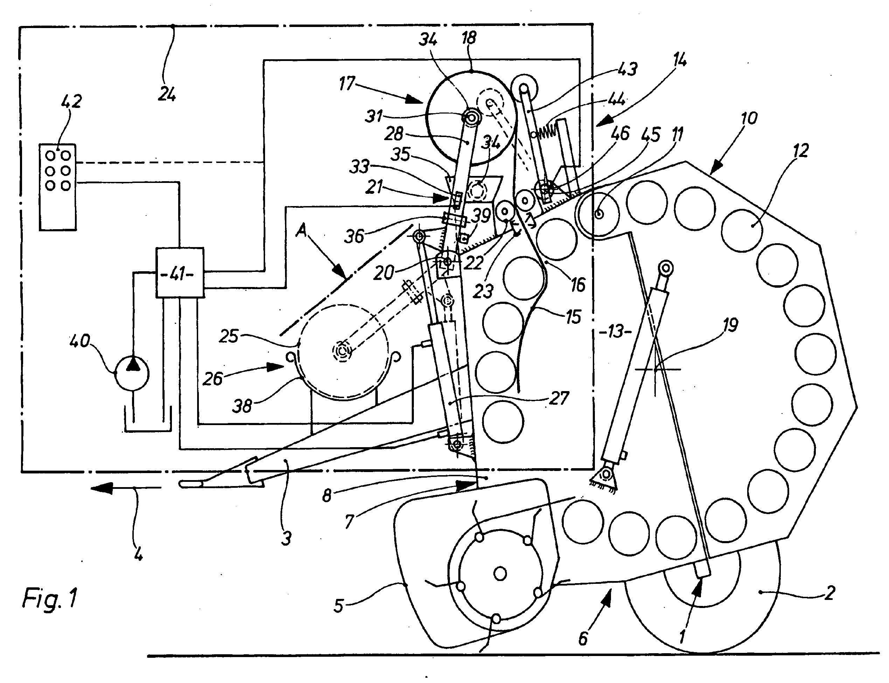

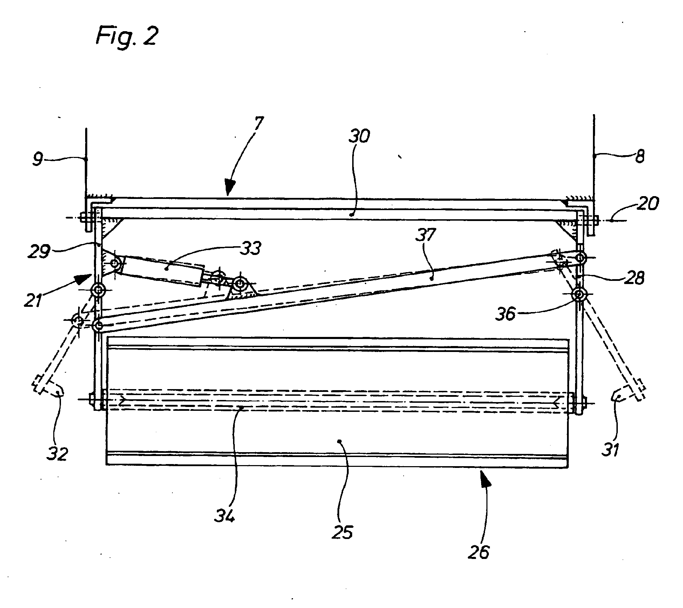

Die in Fig. 1 und 2 dargestellte Schnellwechseleinrichtung 24 weist eine mittels eines Hydrozylinders 27 um eine parallel zur Mittelachse 19 des Preßraumes 13 gelegene Drehachse 20 schwenkbare Materialbahnrollenhalterung 21 auf. Die Materialbahnrollenhalterung 21 umfaßt zwei nebeneinander angeordnete Ausleger 28, 29, die einenends über eine Querstrebe 30 fest miteinander verbunden und um die Drehachse 20 schwenkbar am Vordergehäuse 7 angelenkt sind. Anderenends weist jeder Ausleger 28, 29 einen Aufnahmezapfen 31, 32 für eine Materialbahnrolle 18, 25, z. B. Netzrolle auf. Die Aufnahmezapfen 31, 32 sind gegenüberliegend angeordnet und über eine Verstelleinrichtung, beispielsweise mittels Hydrozylinder 33, so weit auseinander bewegbar, daß die Aufnahmezapfen 31, 32 in oder bei Bedarf außer Eingriff mit dem Hohlkern 34 einer Materialbahnrolle 25 bringbar sind, um die Materialbahnrolle 25 einzusetzen, zu halten oder herauszunehmen. Zur Aufnahme einer leeren Materialbahnrolle, d. h. des Hohlkerns 34 dient eine unterhalb der Abrollstation 17 angeordnete Sammelmulde 35.

Wie am besten aus Figur 2 ersichtlich, weist jeder Ausleger 28, 29 im Abstand von der Drehachse 20 eine zweite Drehachse 36 auf, die rechtwinklig zur Drehachse 20 angeordnet ist, so daß die Aufnahmezapfen 31, 32 in einer Querebene verstellbar sind. Beide Ausleger 28, 29 sind über eine Koppelstange 37 verbunden, die einenends an einer rückwärtigen Verlängerung des Auslegers 28, 29 über dessen Drehachse 20 hinaus und anderenends zwischen Drehachse 20 und Aufnahmezapfen 28 angreift, so daß eine gegensinnige Bewegung der Aufnahmezapfen 31, 32 erzeugt wird, wenn die Koppelstange 37 mittels des zwischen dieser und dem Ausleger 28, 29 angeordneten Hydrozylinders 33 verstellt wird, d. h. die Aufnahmezapfen 31, 32 werden aufeinander zu oder voneinander weg bewegt.

Die Materialbahnrollenhalterung 21 ist mittels des Hydrozylinders 27 zwischen einer in Fig. 1 in Strichlinie gezeigten Position, in der sich eine volle Materialbahnrolle 25 in einer als Vorratsstation 26 ausgebildeten Halbschale 38 befindet und der in Volllinie dargestellten, durch Anschlag 39 begrenzten Betriebsposition der Materialbahnrolle 18 hin und her verschwenkbar. Die Verschwenkung der Materialbahnrollenhalterung 21 erfolgt von einer Energiequelle, z. B. Hydropumpe 40, über eine Steuereinheit 41 und eine Betätigungseinrichtung/Bediengerät 42 auf dem Schlepper manuell per Knopfdruck oder auch automatisch in Abhängigkeit vom Materialbahnvorrat auf der Materialbahnrolle 18 in der Abrollstation 17. Hierzu ist eine Sensoreinrichtung vorgesehen in Form einer Tasteinrichtung 43, die von einer Druckfeder 44 gegen die Materialbahnrolle 18 gezogen wird und um eine ortsfeste Achse 45 drehbar ist. Die Tasteinrichtung 43 steht über ein seinen Schwenkweg abgreifendes Drehpotentiometer 46 oder ähnliche Sensoren mit der Steuereinheit 41 und/oder der Betätigungseinrichtung 42 derart in Wirkverbindung, daß der gesamte Ablauf automatisch ausgelöst wird, wenn die Materialbahnrolle 18 leer ist oder einen Restvorrat erreicht, der kleiner ist als der Bedarf für eine volle Ballenumhüllung. Dazu können auf dem Netz entsprechende Markierungen oder auch Längenmeßeinrichtungen verwendet werden, die die ablaufende Netzlänge messen und in Abhängigkeit davon auch die Trenneinrichtung 23 betätigen.

Anstelle zweier doppeltwirkender Hydrozylinder 27, 33 ist es auch möglich, mit nur einem einzigen Hydrozylinder auszukommen, welcher die Aufnahmezapfen 31, 32 zuschwenkt und danach die Materialbahnrolle 25 hochschwenkt, während die Rückstellbewegungen durch Federmittel erfolgen.

### Die Funktion der Schnellwechseleinrichtung 24 ist wie folgt:

Befindet sich weder in der Abroll- 17 noch in der Vorratsstation 26 eine Materialbahnrolle 18, 25, so legt man zunächst eine volle Materialbahnrolle 18 in die Halbschale 38. Per Knopfdruck fahren die Ausleger 28, 29 in die in Fig. 2 gestrichelt gezeichnete Aufnahmeposition und dann automatisch in die in Fig. 1 ebenfalls gestrichelt gezeichnete Position. Nicht dargestellte Positionssensoren bewirken nun, daß die Ausleger 28, 29 in die in Fig. 1 und 2 in Volllinie gezeichneten Positionen fahren und dabei die volle Materialbahnrolle 18 in die Abrollstation 17 transportieren. Die Tasteinrichtung 43 sowie nicht dargestellte Halte- und Bremseinrichtungen werden automatisch in Wirkeingriff gebracht. Eine zweite Materialbahnrolle 25 legt man in die Halbschale 38 als Vorrat. Die Rundballenpresse ist nun betriebsbereit. Wird während des Betriebes der Rundballenpresse die Materialbahnrolle 18 leer, so gibt die Tasteinrichtung 43 dem Schlepperfahrer ein entsprechendes Signal, so daß dieser den Schnellwechsel manuell auslösen kann. Ist Automatikmodus programmiert, löst die Tasteinrichtung 43 den Ablauf über ein Signal an die Steuereinheit 41 oder das Bediengerät 42 aus. Daraufhin fahren die Aufnahmezapfen 31, 32 automatisch in der Abrollstation 17 auseinander, der Hohlkern 38 fällt selbsttätig nach unten in die Sammelmulde 35, die Ausleger 28, 29 schwenken in die Vorratsstation 26, greifen die volle Materialbahnrolle 25 und legen diese nach Zurückschwenkung in die Abrollstation 17.

Im Rahmen dieses Ausführungsbeispieles ist es auch denkbar, anstelle einer Halbschale 38 ein Vorratsmagazin mit mehreren Materialbahnrollen zu verwenden, die bei Bedarf selbsttätig, z. B. auf einer schiefen Ebene, in die Vorratsstation 26 rollen. Alternativ ist es auch möglich, ein Drehrevolvervorratsmagazin mit wenigstens zwei Materialbahnrollen an den Auslegern auf Tragelementen anzuordnen. In einer unteren Position ist so eine leichte Befüllung des Drehrevolvermagazines möglich. In der oberen Position der Ausleger können die einzelnen Materialbahnrollen jeweils nach Drehung des Drehrevolvermagazines in Betriebsposition gebracht werden. In einfacher Weise können beide Materialbahnrollen auch in Halbschalen gelagert sein, die durch ein Drehgelenk miteinander verbunden sind. Zum Tausch wird die eine Halbschale gekippt und die Materialbahnrolle in die zweite Halbschale gerollt. Eine Gewichtsentlastungsfeder greift an der einen Halbschale an.

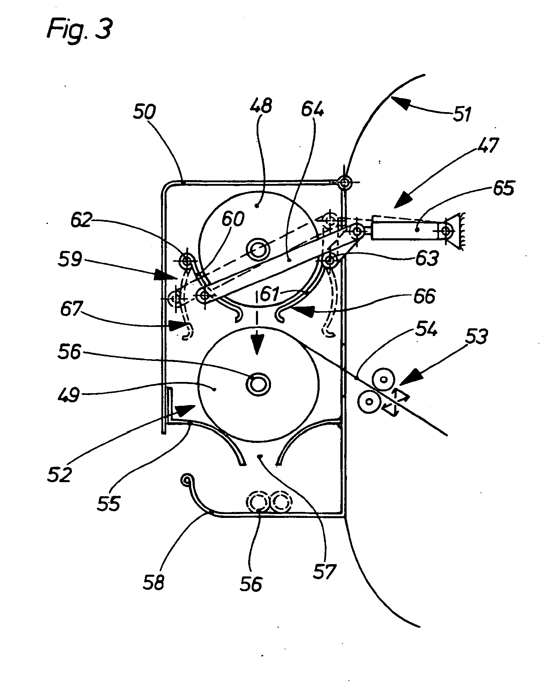

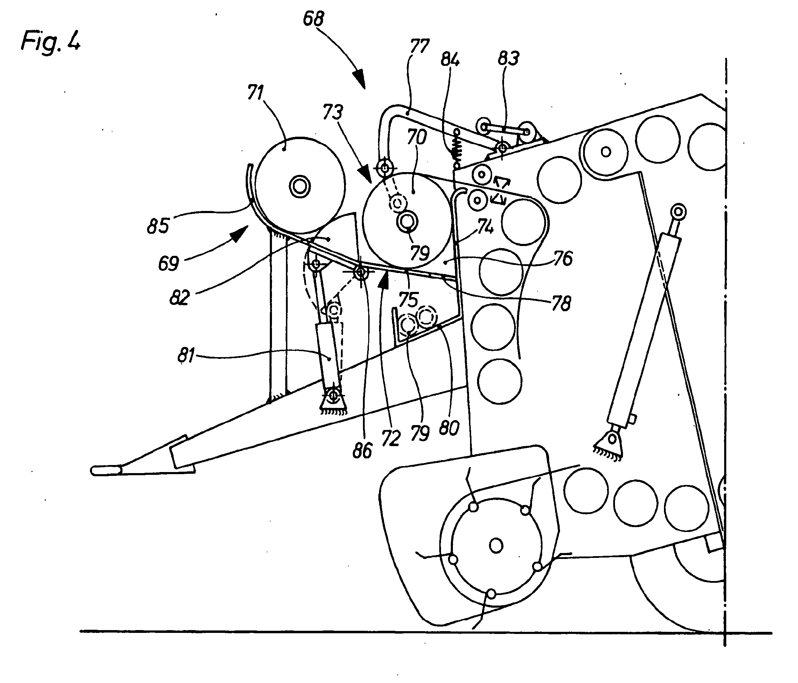

Bei dem in Figur 3 dargestellten Ausführungsbeispiel einer Schnellwechseleinrichtung 47 sind zwei Materialbahnrollen 48, 49 achslos übereinander in einem aufklappbaren Aufnahmebehälter 50 gelagert, welcher beispielsweise am Hintergehäuse 51 der Rundballenpresse angeordnet ist. Die Abrollstation 52, d. h. die Materialbahnrolle 49, von der sich die Umhüllvorrichtung 53 die Materialbahn 54 abzieht, ist unten angeordnet. Die Unterseite des Aufnahmebehälters 50, auf dem die Materialbahnrolle 49 ruht, bildet ein nach unten offener trichterförmiger Boden 55 mit einer sich parallel zum Hohlkern 56 der Materialbahnrolle 49 erstreckenden Ausnehmung 57, die größer ist als die Abmessung des Hohlkernes 56. Dadurch kann der nach Leerwerden der Materialbahnrolle 49 übrigbleibende Hohlkern 56 selbsttätig nach unten in eine Sammelmulde 58 fallen, so daß Platz für eine neue Materialbahnrolle 48 geschaffen ist. Die obere Materialbahnrolle 49 stellt die Ersatz- bzw. Vorratsrolle dar und lagert ebenfalls achslos auf einem aufklappbaren Boden 59. Der Boden 59 besteht aus zwei viertelkreisförmigen Schalen 60, 61, welche jeweils um eine Drehachse 62, 63 verschwenkbar sind. Beide Schalen 60, 61 sind so durch eine Koppelstange 64 verbunden, daß diese bei Betätigung mittels eines Hydrozylinders 65 aus einer in Volllinie gezeichneten Halteposition 66 in eine in Strichlinie gezeichnete Durchlaßposition 67 für die Materialbahnrolle 49 schwenken, in der die Materialbahnrolle 49 in die Abrollstation 52 gleitet. Die Betätigung kann manuell, elektrisch und/oder hydraulisch sowie vollautomatisch entsprechend dem in Fig. 1 und 2 beschriebenen Ausführungsbeispiel erfolgen. Im Rahmen des Beispiels kann statt zweier Schalen 60, 61 eine schwenkbare Halbschale oder ein herausziehbarer Boden verwendet werden. Alternativ kann beispielsweise die obere Materialbahnrolle mittels Tragachsen in seitlichen Führungen verschiebbar gelagert und nach Entriegelung geeigneter Einrichtungen absenkbar sein. Im Rahmen des Beispiels können die Schalen 60, 61 auch manuell, d. h. ohne Energie, leicht betätigt werden durch geeignete Schwenkhebelmachanismen. Die Rundballenpresse gemäß Fig. 4 weist eine Schnellwechseleinrichtung 68 mit einem Vorratsmagazinschacht 69 für wenigstens zwei Materialbahnrollen 70, 71 auf, die auf einem nach Art einer schiefen Ebene geneigten Boden 72 achslos gelagert sind. Die Materialbahnrolle 70 liegt in der Abrollstation 73 an Wandungen 74, 75 eines Aufnahmebehälters 76 an und wird mittels einer an sich bekannten Brems- und Halteeinrichtung 77 gegen die Wandungen 74, 75 gedrückt. Die Wandung 75 weist an der tiefsten Stelle eine Durchlaßöffnung 78 für den leeren Hohlkern 79 auf, der nach Leerwerden der Materialbahnrolle 70 selbsttätig in eine darunter angeordnete Sammelmulde 80 fällt. Die Materialbahnrolle 71 wird durch ein in den Boden mittels Hydrozylinder 81 ein- und ausschwenkbares Haltesegment 82 in Bereitschaftsstellung auf Abstand von der Materialbahnrolle 70 gehalten. Wird die Materialbahnrolle 70 leer, erhält der Bediener mittels einer mit der Brems- und Halteeinrichtung 77 gekoppelten Sensoreinrichtung 83 ein Signal, worauf das Haltesegment 82 aus dem Boden 72 in die in Strichlinie gezeichnete Position fällt und die Materialbahnrolle 71 auf dem geneigten Boden 72 in die Abrollstation 73 rollt. Dabei wird die Brems- und Halteeinrichtung 77 wieder in die in Volllinie gezeigte Position gebracht. Das in den Boden 72 einschwenkende Haltesegment 82 kann als Drückeinrichtung verwendet werden, um den Widerstand der gegen die Kraft eines Federelementes 84 ausweichenden Brems- und Halteeinrichtung 77 zu überwinden. Als Befüllhilfe kann das von der Abrollstation 73 abgewandte Bodenteil 85 beispielsweise um die Drehachse 86 nach unten schwenkbar ausgebildet sein.

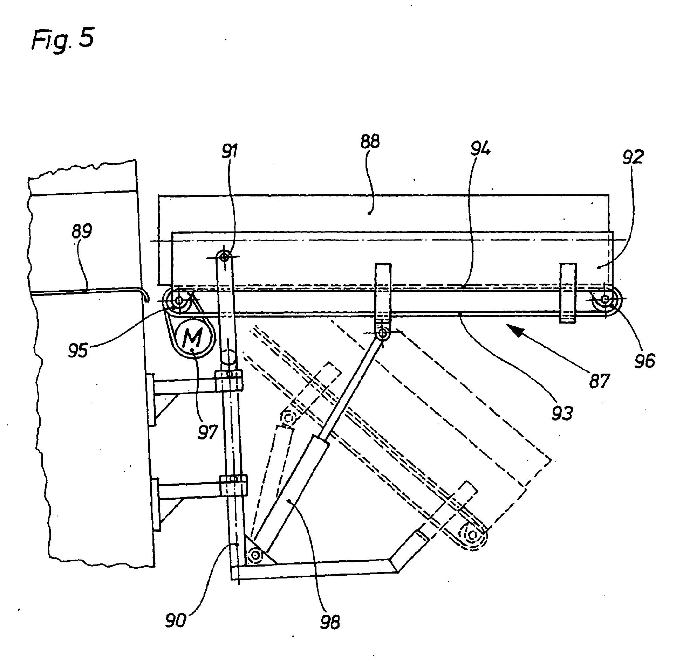

Hinsichtlich die Aufbaues und der Wirkungsweise einer Rundballenpresse mit einer Ladeeinrichtung für eine Vorrats-Materialbahnrolle 88 in eine Abrollstation 89 gemäß Fig. 5 kann auf die DE 197 11 164 A1 verwiesen werden, deren Nachteile in der Beschreibungseinleitung dargelegt sind. Von einer derartigen Rundballenpresse zeigt Fig. 5 nur einen Teil der Abrollstation 89 sowie eine um eine vertikale 90 und eine horizontale Drechachse 91 verschwenkbare Lademulde 92 in Form einer Halbschale.

Neu ist die Ausgestaltung dieser Ladeeinrichtung als Schnellwechseleinrichtung 87. Hierzu durchgreift die Lademulde 92 von unten über dessen gesamte Länge ein umlaufendes, antreibbares Förderelement, das beispielsweise ein Förderband 93 ist. Das Lasttrum 94 steht gegenüber dem Boden der Lademulde 92 nach oben vor, so daß die Materialbahnrolle 88 über deren Länge auf dem Lasttrum 94 aufliegt. Das Förderband 93 wird von Umlenkrollen 95, 96 getragen. Die Umlenkrolle 95 ist mittels eines Elektromotors 97 antreibbar. Das Förderband 93, der Hydrozylinder 98 zum Verschwenken der Lademulde 92 um die horizontale Achse 91 sowie ein nicht dargestellter Hydrozylinder zum Verschwenken der Lademulde 92 um die vertikale Drehachse 90 sind mittels einer hier nicht gezeigten Betätigungseinrichtung ansteuerbar, wie in den vorher beschriebenen Ausführungsbeispielen dargestellt, so daß die Materialbahnrolle 88 vom Schleppersitz per Knopfdruck oder automatisch in die Abrollstation 89 überführbar ist. Die Pressenverkleidung kann um die vertikale Drehachse 90 mit verschwenkt und automatisch ent- sowie verriegelt werden.

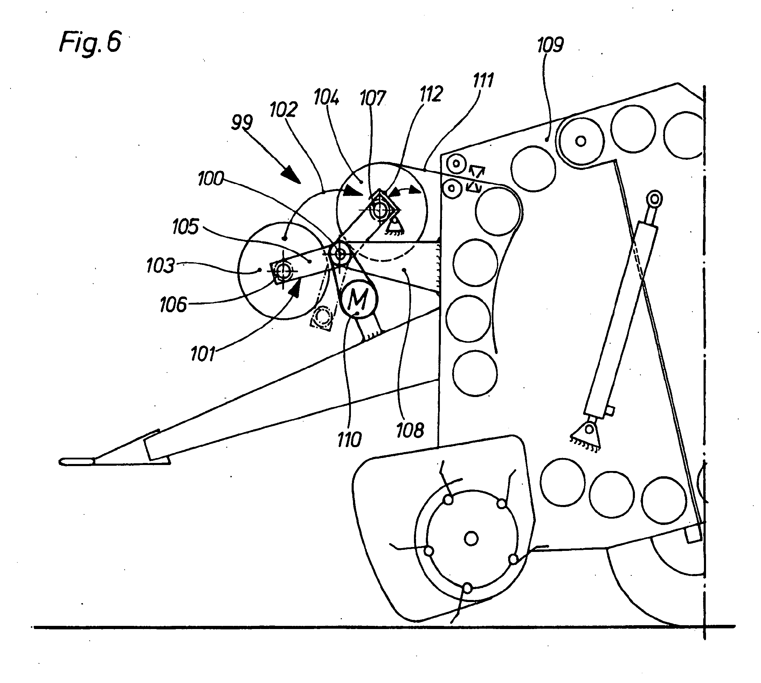

Die in Fig. 6 dargestellte Schnellwechseleinrichtung 99 umfaßt eine um eine Drehachse 100 verschwenkbare Dreheinrichtung 101, welche wenigstens zwei in Drehrichtung 102 um beispielsweise 150° gegeneinander versetzte Materialbahnrollen 103, 104 trägt. Die Dreheinrichtung 101 umfaßt zwei in axialem Abstand nebeneinander angeordnete Doppelarme 105. Der Abstand der Doppelarme 105 entspricht der Breite einer Materialbahnrolle, so daß diese mittels einer Tragachse 106, 107, wie dargestellt oder achslos in einer am Doppelarm 105 angelenkten Mulde gelagert ist. Die Dreheinrichtung 102 ist über eine Konsole 108 mit dem Vordergehäuse 109 verbunden und mittels eines geeigneten Antriebes, z. B. Elektromotor 100, in Drehrichtung 102 verstellbar. In der in Figur 6 in Volllinie gezeichneten Position der Dreheinrichtung 101 wird die Materialbahn 111 von der Materialbahnrolle 104 abgezogen, während die zweite Materialbahnrolle 103 in Bereitschaftsstellung gehalten wird. Ist die Materialbahnrolle 104 leer, wird die Dreheinrichtung 101 per Knopfdruck oder automatisch in die in Strichpunktlinie gezeichnete Position verschwenkt, so daß die Materialbahn dann von dieser (vollen) Materialbahnrolle 103 benutzt wird. Die Dreheinrichtung 101 ist mittels einer Arretierungseinrichtung 112 in den jeweiligen Positionen mittels einer Schwenkklinke ver- und entriegelbar.

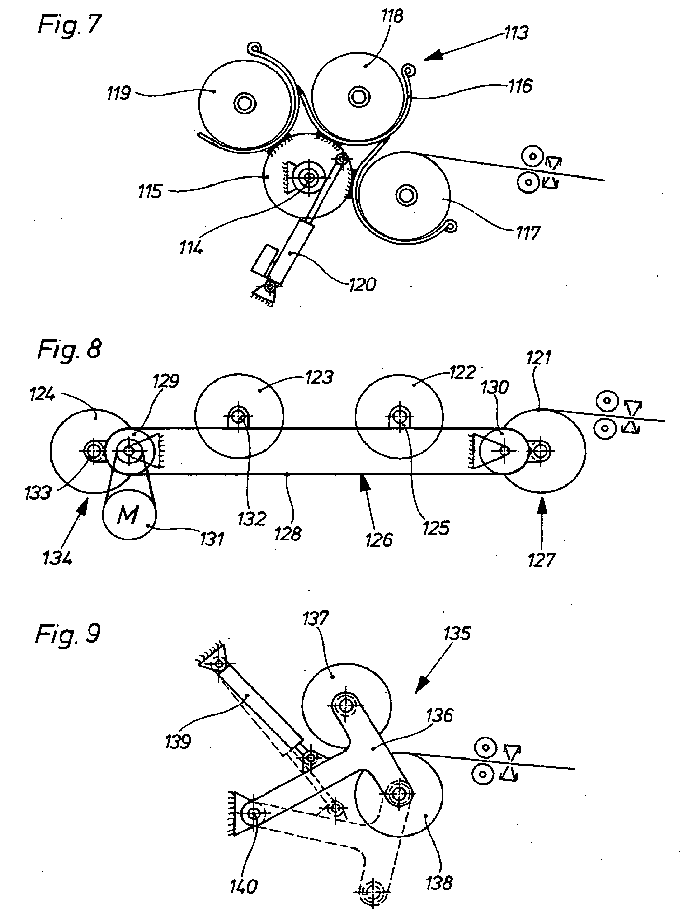

Die in Figur 7 dargestellte Schnellwechseleinrichtung 113 besteht aus einem um eine ortsfeste Drehachse 114 rotierend antreibbaren Rohr 115, welches entlang seines Umfanges versetzt drei Halbschalen 116 zur achslosen Aufnahme jeweils einer Materialbahnrolle 117, 118, 119 trägt. Ist die erste Materialbahnrolle 117 leer, kommt nach entsprechender Drehung die zweite 118, bzw. die dritte Materialbahnrolle 118 zum Einsatz. Der Antrieb kann beispielsweise durch einen Linearmotor 120 erfolgen.

In dem Ausführungsbeispiel gemäß Fig 8 sind mehrere Materialbahnrollen 121 bis 124 auf einem mit Mitnehmern 125 versehenen, umlaufenden und antreibbaren Endlosförderer 126 angeordnet. Durch entsprechenden Vorschub des Endlosförderers 126 werden die Materialbahnrollen 121 bis 124 nacheinander in die Abrollstation 127 bewegt. Der Endlosförderer 126 wird von zwei im Abstand nebeneinander angeordneten Ketten 128 oder Riemen gebildet, die über zwei Umlenkrollen 129, 130 laufen, von denen eine 129 mittels Elektromotor 131 antreibbar ist. Der seitliche Abstand der Ketten 128 bzw. Riemen ist so groß, daß die Materialbahnrollen in ihrer Breite dazwischen passen. Die Mitnehmer 125 sind z. B. über Steckbolzen 132 mit der Aufnahmebohrung, Hohlkern 133, einer Materialbahnrolle verbunden. Als Mitnehmer sind auch federnd seitlich aufklapp- oder aufschiebbare Dorne möglich, die jeweils auf beiden Seiten in den Hohlkern einer Materialbahnrolle eingreifen. Die Befüllung des Endlosförderers 126 findet vorzugsweise statt, wenn sich eine Materialbahnrolle 124 in Position 134 befindet.

Die Schnellwechseleinrichtung 135 gemäß Fig. 9 verschwenkt zwei ortsfest aber drehbar an einem T-förmigen Tragarm 136 gelagerte Materialbahnrollen 137, 138 mittels eines Hydrozylinders 139 gemeinsam um eine Drehachse 140. Ist die erste Materialbahnrolle 137 leer, verschwenkt der Tragarm 136 aus der in Volllinie gezeichneten Position in die in Strichlinie gezeichnete Position, in der die zweite Materialbahnrolle 138 verwendet wird.

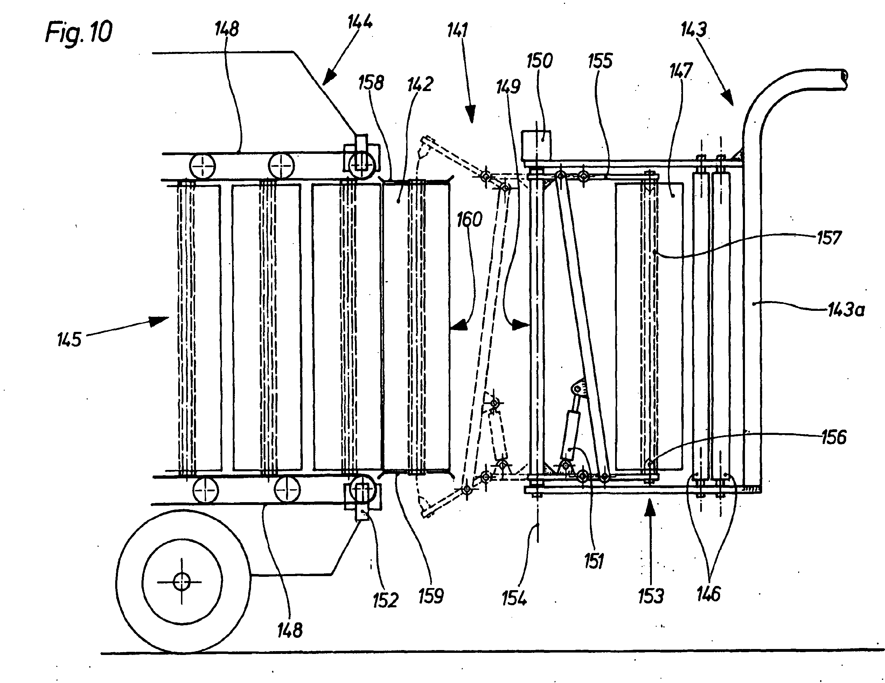

In Figur 10 ist eine Ausführungsform der Erfindung dargestellt. Hierbei dient eine erfindungsgemäße Schnellwechseleinrichtung 141 zum Wechseln von Folienrollen 142 an einem Ballenumwickler 143, der von einer Rundballenpresse getragen wird. Hinsichtlich des Aufbaues und der Wirkungsweise einer solchen bekannten Funktionseinheit aus Rundballenpresse 144 und Ballenumwickler 143 kann z.B. auf die europäische Patentanmeldung Nr. EP 10 77 024 A1 verwiesen werden. Von einer derartigen Funktionseinheit 144, 143 zeigt Fig. 10 in Seitenansicht lediglich den hinteren Teil einer Rundballenpresse 144 mit seitlich angeordneter Vorratsstation 145 für mehrere gestellfest gelagerte Vorratsrollen 142 und vom Ballenumwickler 143 nur den Dreharm 143a, welcher eine Stretcheinheit 146 und eine Folienrolle 147 trägt, von der die Folie während des Umwickelvorganges abgezogen wird.

Neu ist, dass mehrere Vorrats-Folienrollen 142 durch eine Transporteinrichtung 148 nacheinander zu einer Folienrollenhalterung 149 gefördert werden, welche eine am Dreharm 143a gelagerte Folienrolle 147, deren Vorrat verbraucht ist oder die unbrauchbar ist, gegen eine neue Folienrolle 142 austauscht. Hinsichtlich der weiteren Ausgestaltung, Funktion und Wirkungsweise der als ein Beispiel dienenden Schnellwechseleinrichtung 141 kann auf die in den Figuren 1 und 2 dieser Anmeldung dargestellte Materialbahnrollenhalterung 24, 21 sowie die zugehörige Beschreibung verwiesen werden. Die Transporteinrichtung 148 und die Folienrollenhalterung 149 sind durch geeignete Antriebe 150, 151, 152 fremdkraftbetätigbar. Die Steuerung der Transporteinrichtung 148 und der Folienrollenhalterung 149 erfolgt in zeitlicher Abstimmung mittels einer manuellen oder sensorischen Signalgebereinheit. Zur vollständigen Automatisierung erfolgt die Steuerung durch einen Sensor, der die ablaufende Folienbahnlänge oder den aktuellen Durchmesser der Folienrolle 147 misst.

Kurz bevor der Vorrat der in der Abrollstation 153 am Dreharm 145 befindlichen Folienrolle 147 erschöpft, erhält der Bediener ein Signal, dass ein Folienrollenaustausch startet. Das heißt für den Bediener, dass der Pressvorgang während des Folienrollenaustausches noch fortgesetzt werden kann, aber der Wickler zur Zeit außer Betrieb bzw. beim Rollenaustausch ist. Der Dreharm 145 bleibt in einer Stellung stehen, in der die Folienrollenhalterung 149 auf die Transporteinrichtung 148 ausgerichtet ist. Auf Sensorsignal wird der Drehantrieb 150 betätigt, wodurch die Folienrollenhalterung 149 um die vertikale Achse 154 um 180° in die in Strichlinie gezeigte Position schwenkt. Etwa nach 90° Drehung öffnen die seitlichen Ausleger 155 mittels Hydrozylinder 151, wodurch die Aufnahmezapfen 156 den Hohlkern 157 der verbrauchten Folienrolle 147 loslassen, welcher in einem nicht gezeigten Behälter gesammelt wird. Sobald die Aufnahmezapfen 156 die in Strichlinie gezeigte Position einnehmen, wird die Transporteinrichtung 148 durch Sensorsignal zum Vorschub der Folienrolle 142 betätigt. Die neue Folienrolle 142 wird zwischen obere 158 und untere, gestellfeste Führungselemente 159 geschoben, die Längs- und Querführungsschlitze entsprechend dem Hohlkern 157 der Folienrolle 142 aufweisen, welche den Gleitweg der Folienrolle 142 vorgeben. Erreicht die Folienrolle 142, die in Längsrichtung durch Sensor vorbestimmbare Position 160, so fahren die Ausleger 154 zusammen und halten die Folienrolle 147 fest. Dann schweben die Ausleger 155 entweder 180° weiter oder 180° zurück in die in Volllinie gezeigte Position, so dass nach dem Einlegen des Folienanfanges in die Stretcheinheit 146 bzw. in eine nicht dargestellte gestellfeste Klemmeinrichtung der Wickelvorgang fortgesetzt werden kann, welches dem Bediener signalisiert wird. Die Steuerung vorgenannter Arbeitsabläufe erfolgt in zeitlicher Abstimmung mit dem Dreharm 143a. Die Vorrats-Folienrollen 142, die in vorliegendem Beispiel vertikal stehend im Magazin angeordnet sind, können auch liegend übereinander oder auf einem umlaufenden Endlosförderer gemäß Figur 8 angeordnet sein. Alternativ können die Folienrollen auch von aufspreizbaren Hängedornen getragen werden. Anstelle der gezeigten Folienrollenhalterung mit zwei Aufnahmeelementen kann auch eine Folienrollenhalterung ausreichen, die die Folienrolle während des Austauschvorganges umfangsseitig umgreift oder einseitig in den Papphülsenkern eingreift. Die Folienrollenhalterung selbst kann anstelle der 180° Schwenkbewegung auch translatorisch bewegt werden oder auch um 90° um eine horizontale quer zur Fahrtrichtung liegende Achse verschwenkt werden. Anstelle der schwenkbaren Anordnung der Folienrollenhalterung am Dreharm 143a gemäß vorstehendem Beispiel, kann auch eine zusätzliche Übergabe- bzw. Übernahmeeinrichtung am Gestell angeordnet sein, die eine neue Folienrolle in eine dafür geeignete Folienrollenhalterung transportiert.

Die Schnellwechseleinrichtung 141 kann auch nur an Ballenumwicklungseinrichtungen, d.h. ohne Rundballenpresse angewendet werden. Die Schnellwechseleinrichtung ist auch anwendbar bei den sogenannten Ringwicklern, bei denen die Folienrollen den Ballen nicht in einer Horizontalebene umkreisen, sondern in einer Vertikalebene, siehe beispielsweise WO 02/076184 A1. Hierbei bietet es sich an, die Folienrollen liegend zu lagern und nach einseitiger Öffnung der Folienrollenhalterung am Drehring und Entfernung der verbrauchten Rolle, die neue Folienrolle durch axiales Verschieben in die Folienrollenhalterung zu befördern.

Durch die erfindungsgemäße Vorrichtung wird die Durchsatzleistung der Funktionseinheit um 10 - 20 % erhöht. Die bei herkömmlichen Vorrichtungen aufgrund des Rollenwechsels anfallenden Stillstandszeiten von ca. 15 Minuten /Stunde werden auf ein Minimum reduziert.

## Patentansprüche

1. Ballenpresse mit einem nachgeschalteten Ballenumwickler (143), welcher wenigstens eine in einer Abrollstation (153) gelagerte Materialbahnrolle (147) aufweist und wenigstens eine Vorratsstation (145) für mehrere Vorratsrollen (142), welche nach Aufbrauch jeweils einer in der Abrollstation (153) befindlichen Materialbahnrolle (147) nacheinander in die Abrollstation (153) überführbar sind, **dadurch gekennzeichnet, dass** die Vorratsrollen (142) mittels einer Transporteinrichtung (148) zu einer Schnellwechseleinrichtung (141) förderbar sind, mittels welcher die aufgebrauchte Materialbahnrolle (147) gegen eine neue Vorratsrolle (142) auswechselbar ist.

2. Ballenpresse nach Anspruch 1, **dadurch gekennzeichnet, dass** die Transporteinrichtung (148) und die Schnellwechseleinrichtung (141) durch Antriebe (150, 151, 152) fremdkraftbetätigbar oder manuell betätigbar sind.

3. Ballenpresse nach einem der vorhergehenden Ansprüche, **dadurch gekennzeichnet, dass** die Steuerung der Transporteinrichtung (148) und/oder der Schnellwechseleinrichtung (141) manuell oder mittels sensorischer Signalgebereinheiten erfolgt.

4. Ballenpresse nach einem der vorhergehenden Ansprüche, **dadurch gekennzeichnet, dass** die Steuerung der Transporteinrichtung (148) und/oder der Schnellwechseleinrichtung (141) durch einen Sensor erfolgt, der die ablaufende Folienbahnlänge oder den aktuellen Durchmesser der Folienrolle (147) misst.

5. Ballenpresse nach einem oder mehreren der vorhergehenden Ansprüche, **dadurch gekennzeichnet, dass** die Transporteinrichtung (148) aus einem oberen und unteren Endlosförderer besteht, zwischen denen die Vorratsrollen (142) vertikal stehend angeordnet sind.

6. Ballenpresse nach einem oder mehreren der vorhergehenden Ansprüche, **dadurch gekennzeichnet, dass** die Vorratsrollen (142) auf einem um vertikale Achsen umlaufenden Endlosförderer angeordnet sind.

7. Ballenpresse nach einem oder mehreren der vorhergehenden Ansprüche, **dadurch gekennzeichnet, dass** die Schnellwechseleinrichtung (141) eine Folienrollenhalterung (149) mit wenigstens einem bewegbaren Aufnahmezapfen (156) für eine Materialbahnrolle (147, 142) aufweist.

8. Ballenpresse nach Anspruch 7 und nach einem oder mehreren der vorhergehenden Ansprüche, **dadurch gekennzeichnet, dass** die Steuerung der Transporteinrichtung (148) und/oder der Folienhalterung (149) in zeitlicher Abstimmung mit dem Dreharm (143a) erfolgt.

9. Ballenpresse nach einem oder mehreren der vorhergehenden Ansprüche, **dadurch gekennzeichnet, dass** die Schnellwechseleinrichtung (141, 149) an einem Dreharm (143a) angeordnet ist, während die Transporteinrichtung (148) einem ortsfesten Teil wie der Rundballenpresse oder dem Gestell des Ballenumwicklers (143) zugeordnet ist.

10. Ballenpresse nach einem der vorhergehenden Ansprüche 1 bis 8, **dadurch gekennzeichnet, dass** die Schnellwechseleinrichtung (141, 149) und die Transporteinrichtung (148) gestellfest aber beweglich gelagert sind.

## Claims

1. A baler with a subsequent bale wrapper (143), which has at least one roll of material web (147) mounted in an unrolling station (153) and at least one supply station (145) for a plurality of supply rolls (142), which, once a roll of material web (147) in each case located in the unrolling station (153) has been used up, can be transferred in succession into the unrolling station (153), **characterised in that** the supply rolls (142) can be conveyed by means of a transport means (148) to a quick-change means (141), by means of which the used-up roll of material web (147) can be exchanged for a new supply roll (142).

2. A baler according to Claim 1, **characterised in that** the transport means (148) and the quick-change means (141) can be actuated by external power or manually by drives (150, 151, 152).

3. A baler according to one of the preceding claims, **characterised in that** the transport means (148) and/or the quick-change means (141) is controlled manually or by means of sensor-based signal generator units.

4. A baler according to one of the preceding claims, **characterised in that** the transport means (148) and/or the quick-change means (141) is controlled by a sensor which measures the length of film web running out or the current diameter of the film roll (147).

5. A baler according to one or more of the preceding claims, **characterised in that** the transport means (148) consists of an upper and lower endless conveyor, between which the supply rolls (142) are arranged standing vertically.

6. A baler according to one or more of the preceding claims, **characterised in that** the supply rolls (142) are arranged on an endless conveyor which revolves around vertical axes.

7. A baler according to one or more of the preceding claims, **characterised in that** the quick-change means (141) has a film-roll holder (149) with at least one movable receiving journal (156) for a roll of material web (147, 142).

8. A baler according to Claim 7 and one or more of the preceding claims, **characterised in that** the transport means (148) and/or the film holder (149) is/are controlled in timed coordination with the rotary arm (143a).

9. A baler according to one or more of the preceding claims, **characterised in that** the quick-change means (141, 149) is arranged on a rotary arm (143a), whereas the transport means (148) is associated with a stationary part such as the round baler or the frame of the bale wrapper (143).

10. A baler according to one of the preceding Claims 1 to 8, **characterised in that** the quick-change means (141, 149) and the transport means (148) are frame-mounted but movable.

## Revendications

1. Presse à balles avec une enrubanneuse de balles montée en aval (143) qui présente au moins un rouleau de bande de matière (147) logé dans un poste de déroulement (153) et au moins un poste d'alimentation (145) pour plusieurs rouleaux d'alimentation (142) qui peuvent être transférés après épuisement respectivement d'un rouleau de bande de matière (147) se trouvant dans le poste de déroulement (153) les uns après les autres dans le poste de déroulement (153), **caractérisée en ce que** les rouleaux d'alimentation (142) peuvent être transportés au moyen d'un dispositif de transport (148) à un dispositif de changement rapide (141), au moyen duquel le rouleau de bande de matière (147) épuisé peut être remplacé par un nouveau rouleau d'alimentation (142).

2. Presse à balles selon la revendication 1, **caractérisée en ce que** le dispositif de transport (148) et le dispositif de changement rapide (141) peuvent être actionnés par une force extérieure ou manuellement par des entraînements (150, 151, 152).

3. Presse à balles selon l'une quelconque des revendications précédentes, **caractérisée en ce que** la commande du dispositif de transport (148) et/ou du dispositif de changement rapide (141) est effectuée manuellement ou au moyen d'unités d'émission de signaux sensorielles.

4. Presse à balles selon l'une quelconque des revendications précédentes, **caractérisée en ce que** la commande du dispositif de transport (148) et/ou du dispositif de changement rapide (141) est effectuée par un capteur qui mesure la longueur de bande de film se déroulant ou le diamètre actuel du rouleau de film.

5. Presse à balles selon l'une ou plusieurs quelconques des revendications précédentes, **caractérisée en ce que** le dispositif de transport (148) se compose d'un transporteur sans fin supérieur et inférieur, entre lesquels sont disposés en position verticale les rouleaux d'alimentation (142).

6. Presse à balles selon l'une ou plusieurs quelconques des revendications précédentes, **caractérisée en ce que** les rouleaux d'alimentation (142) sont disposés sur un transporteur sans fin rotatif autour d'axes verticaux.

7. Presse à balles selon l'une ou plusieurs quelconques des revendications précédentes, **caractérisée en ce que** le dispositif de changement rapide (141) présente une fixation de rouleaux de film (149) avec au moins un nez de centrage (156) mobile pour un rouleau de bande de matière (147, 142).

8. Presse à balles selon la revendication 7 et l'une ou plusieurs quelconques des revendications précédentes, **caractérisée en ce que** la commande du dispositif de transport (148) et/ou la fixation de film (149) est effectuée en ajustement temporel avec le bras de rotation (143a).

9. Presse à balles selon l'une ou plusieurs quelconques des revendications précédentes, **caractérisée en ce que** le dispositif de changement rapide (141, 149) est disposé sur un bras de rotation (143a), alors que le dispositif de transport (148) est associé à une partie fixe telle que la presse à balles rondes ou le châssis de l'enrubanneuse de balles (143).

10. Presse à balles selon l'une quelconque des revendications précédentes 1 à 8, **caractérisée en ce que** le dispositif de changement rapide (141, 149) et le dispositif de transport (148) sont logés de manière fixe au châssis mais mobile.
